# EUROPÄISCHE PATENTSCHRIFT

(11) **EP 0 735 351 B1**
(45) Veröffentlichungstag und Bekanntmachung des Hinweises auf die Patenterteilung: **05.06.2002**
(21) Anmeldenummer: 96103340.4
(22) Anmeldetag: 04.03.1996
(51) Int. Cl.: G01K 7/01

(54) **Schaltungsanordnung zum Erfassen der Temperatur eines Leistungs-Halbleiterbauelements**
Circuit arrangement for detecting temperature in a semiconductor power device
Montage de circuit pour détecter la température d'un élément semi-conducteur de puissance

(30) Priorität: 29.03.1995 DE 19511505
(43) Veröffentlichungstag der Anmeldung: 02.10.1996
(73) Patentinhaber: Infineon Technologies AG, 81669 München (DE)
(72) Erfinder: Gantioler, Josef-Matthias, Dipl-Ing., 81925 München (DE); Heil, Holger, Dipl.-Phys., 80799 München (DE); Tihanyi, Jenoe, Dr.-Ing., 85551 Kirchheim (DE)
(74) Vertreter: Patentanwälte Westphal, Mussgnug & Partner

(56) Entgegenhaltungen:
- EP-A- 0 240 807
- US-A- 4 243 898
- US-A- 5 213 416

## Beschreibung

Die Erfindung bezieht sich auf eine Schaltungsanordnung zum Erfassen der Temperatur eines Leistungs-Halbleiterbauelements mit einem in thermischem Kontakt zum Halbleiterbauelement angeordneten bipolaren Halbleiterbauelement, bei der die Größe des Sperrstroms ein Maß für die Temperatur des Leistungs-Halbleiterbauelementes ist.

Eine solche Schaltungsanordnung ist z.B. in der EP 0 240 807 beschrieben worden. Sie weist einen Bipolartransistor auf, dem ein als Stromquelle geschalteter Depletion-MOSFET in Reihe geschaltet ist. Der Bipolartransistor steht in thermischem Kontakt mit dem Leistungs-Halbleiterbauelement. Der Strom der Stromquelle ist einerseits derart eingestellt, daß er niedriger ist als derjenige Sperrstrom des Bipolartransistors, der dann fließt, wenn das Leistungs-Halbleiterbauelement die normale Betriebstemperatur hat. Andererseits ist er so eingestellt, daß er niedriger ist als derjenige Sperrstrom, der dann fließt, wenn das Leistungs-Halbleiterelement Übertemperatur, z.B. 160° C, erreicht hat. Der Übergang von dem einen in den anderen Zustand ist dann am Knoten zwischen Bipolartransistor und Depletion-FET von einem signifikaten Spannungsanstieg begleitet. Dieser Spannungsanstieg wird als Übertemperatursignal ausgewertet.

Da der Sperrstrom des Bipolartransistors exponentiell mit seiner Temperatur ansteigt, können mit dieser Schaltungsanordnung nur Temperaturen von 160° C und höher sicher detektiert werden.

Für manche Anwendungszwecke ist es jedoch erforderlich, nicht nur eine Übertemperatur von ca. 160° C zu erfassen, sondern bereits den Anstieg von der normalen Betriebstemperatur, z.B. 125° C, auf z.B. 140° C. Bei einer solch niedrigen Temperatur liegt der Sperrstrom nur in der Größenordnung 100 nA und ist daher nicht mehr sicher zu detektieren.

Der Erfindung liegt daher die Aufgabe zugrunde, eine Schaltung der beschriebenen Gattung derart weiterzubilden, daß auch niedrigere Temperaturen als 160° C sicher detektiert werden können.

Diese Aufgabe wird dadurch gelöst, daß der Sperrstrom einem verstärkendem Stromspiegel zugeführt wird und daß der verstärkte Strom mit einem Referenzstrom verglichen wird.

Weiterbildungen der Erfindung sind Gegenstand der Unteransprüche.

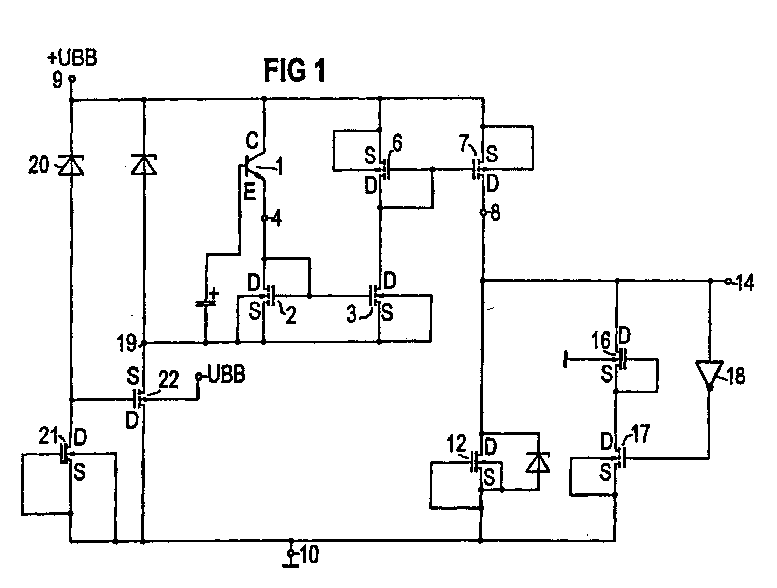

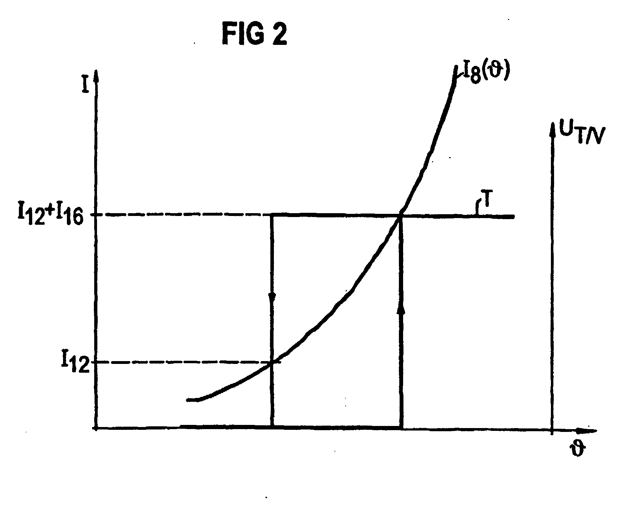

Die Erfindung wird anhand eines Ausführungsbeispiels in Verbindung mit den Figuren 1 und 2 näher erläutert. Es zeigen Figur 1 den Aufbau der erfindungsgemäßen Schaltung und Figur 2 den Ausgangsstrom des Stromspiegels in Abhängigkeit der Temperatur.

Die Schaltungsanordnung nach Figur 1 enthalt ein bipolares Halbleiterbauelement 1, das ein Transistor sein kann. Es ist aber prinzipiell auch möglich, einen Thyristor zu verwenden. Der Bipolartransistor 1 ist mit dem Eingang 4 eines verstärkenden Stromspiegels verbunden, der aus den MOSFETS 2 und 3 und den MOSFET 6 und 7 besteht. Der Drainanschluß des MOSFET 2 ist mit dem Eingang 4 verbunden und mit den Gateanschlüssen der MOSFETS 2 und 3. Er ist damit als Diode geschaltet. Der Drainanschluß des MOSFET 3 ist mit dem Drainanschluß des MOSFET 6 und mit den Gateanschlüssen beider MOSFET 6, 7 verbunden.

Die MOSFET 6 und 7 sind vom p-Kanal-Typ, während die MOSFET 2 und 3 vom n-Kanal-Typ sind. Die Sourceanschlüsse der MOSFET 6, 7 und der Kollektoranschluß des Bipolartransistors 1 sind mit einem ersten Betriebsspannungsanschluß 9 verbunden. Die Sourceanschlüsse der MOSFET 2 und 3 stehen mit dem Ausgang 19 einer Konstantspannungsquelle in Verbindung. Der Stromspiegel 2, 3, 6, 7 ist über einen Ausgang 8 mit dem Drainanschluß eines Depletion-FET 12 verbunden, dessen Sourceanschluß mit einem zweiten Versorgungsspannungsanschluß 10 verbunden ist. Der Ausgang 8 steht außerdem mit einem Ausgang 14 in Verbindung.

Zur Erläuterung der Funktion sei ohne Erläuterung der Funktion der Konstantspannungsquelle angenommen, daß zwischen den Anschlüssen 9 und 19 eine konstante Spannung zur Verfügung steht. Dann fließt durch den Bipolartransistor 1 entsprechend seiner Temperatur ein Sperrstrom, der dem ersten Stromspiegel 2, 3 zugeführt wird. Die MOSFET 2, 3 besitzen bis auf ein unterschiedliches Verhältnis von Kanalquerschnitt zu Kanallänge gleiche Eigenschaften. Der Strom des Bipolartransistors fließt durch den als Diode geschalteten MOSFET 2 zum Eingang 19 und zum Anschluß 10 ab. Der MOSFET 3 zieht dann einen dem Verhältnis der Quotienten Kanalquerschnitt zu Kanallänge der beiden MOSFETS 2, 3 entsprechend höheren Strom durch den als Diode geschalteten MOSFET 6. Dieser Strom fließt ebenfalls über den Ausgang 19 zum Anschluß 10 ab. Der durch den MOSFET 6 fließende Strom wird im MOSFET 7 wieder entsprechend dem Verhältnis der Quotienten Kanallänge zu Kanalquerschnitt der beiden MOSFET 6 und 7 verstärkt und fließt über den Ausgang 8 und den Depletion-FET 12 zum Anschluß 10.

Der Bipolartransistor, der Stromspiegel 2, 3, 6, 7 einerseits und der Depletion-FET 12 andererseits sind nun derart dimensioniert, daß der aus dem Ausgang 8 fließende Strom bei einer vorbestimmten unterhalb der maximal zulässigen Temperatur des Leistungs-Halbleiterbauelements liegenden Temperatur kleiner ist als der Maximalstrom durch den Depletion-FET 12. Am Ausgang 14 liegt dann ein Potential an, das in der Nähe des Potentials des Anschlusses 10 liegt, z.B. auf Nullpotential. Andererseits ist die Schaltungsanordnung derart dimensioniert, daß derjenige Strom durch den Ausgang 8, der bei einer erhöhten, jedoch unterhalb der maximal zulässigen Temperatur des Leistungs-Halbleiterbauelements fließt, größer ist als der maximale Strom des Depletion-FET 12. In diesem Fall tritt am Ausgang 14 eine Spannung auf, die gleich +UBB abzüglich der Drain-Sourcespannung des MOSFET 7 ist. Diese erhöhte Spannung zwischen dem Ausgang 14 und dem Anschluß 10 kann dann als Temperaturerhöhung auf eine unterhalb der kritischen Temperatur liegende Temperatur von z.B. 140° C detektiert werden.

Der Verstärkungsfaktor des Stromspiegels richtet sich danach, welcher Strom noch störungsfrei detektiert werden kann. Beträgt dieser Strom z.B. 1 mA und zieht der Bipolartransistor 1 bei einer Temperatur von 140° nur 100 nA, so muß der Verstärkungsfaktor 10000 betragen. Die gesamte Verstärkung ist das Produkt der Verstärkungen der MOSFET 2, 3 einerseits und der MOSFET 6, 7 andererseits. Diese Paare bilden ihrerseits jeweils auch einen Stromspiegel. Durch die beschriebene Kombination des Stromspiegels 2, 3 mit dem Stromspiegel 6, 7 wird eine sehr einfache Möglichkeit geschaffen, einen schwachen Strom mit wenig Aufwand um mehrere Zehnerpotenzen zu verstärken.

Für manche Anwendungszwecke ist ein Schaltverhalten mit Hysterese erwünscht. Das heißt, daß die Spannung am Ausgang 14 bei einer Temperatur auf den Pegel H springt, die größer ist als diejenige Temperatur, bei dem der Pegel am Ausgang 14 auf L zurückgesetzt wird. Dies läßt sich in einfacher Weise dadurch erreichen, daß mit dem Ausgang 14 ein als Stromquelle geschalteter Depletion-FET 16 verbunden ist, dem ein Enhancement-FET 17 in Reihe geschaltet ist. Im Ausführungsbeispiel ist der Drainanschluß von 16 mit dem Ausgang 14 verbunden, sein Sourceanschluß mit dem Drainanschluß von 17. Der Sourceanschluß von 17 ist mit dem Betriebsspannungsanschluß 10 verbunden. Außerdem ist mit dem Ausgang 14 der Eingang eines Inverters 18 verbunden, dessen Ausgang mit dem Gateanschluß des FET 17 in Verbindung steht.

Die Reihenschaltung der FET 16 und 17 bildet einen Nebenschluß für den durch den Ausgang 8 fließenden Strom, so lange der Pegel am Ausgang 14 L ist. Dann ist der FET 17 leitend gesteuert. Steigt der Strom am Ausgang 8 weiter an, bis der höchste Strom der Stromquellen 12 und 16 erreicht ist, so springt das Potential am Ausgang 14 auf den Pegel H und der FET 17 wird gesperrt. Der Nebenschluß des FET 12 wird damit aufgehoben und der Pegel am Ausgang 14 wird erst dann von H auf L zurückgesetzt, wenn der Strom durch den Ausgang 8 unter den höchsten Strom durch den FET 12 abfällt. Dieses Hystereseverhalten ist in Figur 2 dargestellt.

Das beschriebene Hystereseverhalten läßt sich auch dann erzielen, wenn eine höhere Temperatur von z.B. 160° als Übertemperatur detektiert werden sollen. Dann ist es möglich, den Sperrstrom des Bipolartransistors 1 direkt, d.h. ohne die Stromspiegel, dem Depletion-FET 12 zuzuführen und diesem die Hystereseschaltung 16, 17, 18, parallel zu schalten.

Der Spannungsstabilisator, an dessen Ausgang 19 die Sourceanschlüsse der FET 2, 3 angeschlossen sind, besteht aus einer Zenerdiode 20, der ein als Stromquelle geschalteter Depletion-FET 21 in Reihe geschaltet ist. Dabei ist der Anodenanschluß von 20 mit dem Drainanschluß von 21 verbunden. Mit dem Knoten zwischen Zenerdiode 20 und Depletion-FET 21 ist der Gateanschluß eines Enhancement-FET 22 angeschlossen, dessen Sourceanschluß mit dem Ausgang 19 verbunden ist. Der Drainanschluß steht mit dem zweiten Betriebsspannungsanschluß 10 in Verbindung. Die FET 21 und 22 sind vom komplementären Kanaltyp. Die Wirkungsweise des Stabilisators ist derart, daß durch die Reihenschaltung von 20 und 21 ein konstanter Strom fließt und daher auch die Gate-Sourcespannung und damit die Spannung am Ausgang 19 konstant ist.

Wird die Schaltung als integrierte Schaltung in selbstisolierender Technik ausgeführt, so wird der Bulk-Anschluß von 22 an den Anschluß 9 gelegt, der Bulkanschluß des Depletion-FET 16 an den Anschluß 10.

Bei einer negativen Betriebsspannung am Anschluß 9 gegenüber Anschluß 10 sind FET und Bipolartransistor mit jeweils komplementaren Kanaltypen zu verwenden.

Zur Verbesserung der Störfestigkeit des Bipolartransistors 1 wird an seine Basis ein Kondensator angeschlossen. Im stationären Fall arbeitet er mit offener Basis, im Fall eines Störimpulses wird die Basis-Emitterspannung für die Dauer des Störimpulses auf seinen vorherigen Wert geklemmt. Dadurch wurden störimpulse wirksam gemacht.

## Patentansprüche

1. Schaltungsanordnung zum Erfassen der Temperatur eines Leistungs-Halbleiterbauelementes mit einem in thermischem Kontakt zum Halbleiterbauelement angeordneten bipolaren Halbleiterbauelement, bei der die Größe des Sperrstroms ein Maß für die Temperatur des Leistungs-Halbleiterbauelementes ist,
**dadurch gekennzeichnet, daß** der Sperrstrom einem verstärkenden Stromspiegel (2, 3; 6, 7) zugeführt wird und daß der verstärkte Strom mit einem Referenzstrom verglichen wird.

2. Schaltungsanordnung nach Anspruch 1,
**dadurch gekennzeichnet, daß** der Stromspiegel zwei MOSFET (2, 3) mit unterschiedlichem Verhältnis von Kanalänge zu Kanalquerschnitt und mit im übrigen gleichen Parametern enthält.

3. Schaltungsanordnung nach Anspruch 1 oder 2,
**dadurch gekennzeichnet, daß** der gespiegelte Strom einem weiteren verstärkenden Stromspiegel (6, 7) zugeführt und daß deren verstärkter Strom mit dem Referenzstrom verglichen wird.

4. Schaltungsanordnung nach Anspruch 3,
**dadurch gekennzeichnet, daß** der weitere Stromspiegel zwei MOSFET (6, 7) mit unterschiedlichem Verhältnis von Kanallänge zu Kanalquerschnitt und mit im übrigen gleichen Parametern enthält.

5. Schaltungsanordnung nach einem der Ansprüche 1 bis 4,
**dadurch gekennzeichnet, daß** der Referenzstrom von einem als Konstantstromquelle geschalteten Depletion-MOSFET (12) erzeugt wird, dessen Strom derart eingestellt ist, daß er größer als der gespiegelte Strom bei Normaltemperatur und kleiner als der gespiegelte Strom bei Übertemperatur des Leistungs-Halbleiterbauelementes ist.

6. Schaltungsanordnung nach Anspruch 1,
**dadurch gekennzeichnet, daß** das bipolare Halbleiterbauelement ein Bipolartransistor (1) ist, der mit dem Stromspiegel in Reihe geschaltet ist und daß die Reihenschaltung am Ausgang eines Spannungsstabilisators angeschlossen ist.

7. Schaltungsanordnung nach Anspruch 6,
**dadurch gekennzeichnet, daß** der Spannungsstabilisator die Reihenschaltung aus einer Zenerdiode (20) und einem als Konstantstromquelle geschalteten Depletion-FET (21) vom ersten Kanaltyp aufweist, daß die Reihenschaltung zwischen einem ersten und einem zweiten Betriebsspannungsanschluß (9, 10) angeschlossen ist, an denen die Betriebsspannung liegt, daß der Knoten zwischen Zenerdiode und Depletion-FET mit dem Gateanschluß eines Enhancement-FET (22) vom zweiten Kanaltyp verbunden ist und daß der Enhancement-FET zwischen dem Stromspiegel und dem zweiten Betriebsspannungsanschluß angeschlossen ist.

8. Schaltungsanordnung nach einem der Ansprüche 1 bis 7,
**dadurch gekennzeichnet, daß** der Ausgang (8) des Stromspiegels mit der Drain-Sourcestrecke eines als Stromquelle geschalteten Depletion-FET (12) verbunden ist, daß die Drain-Sourcestrecke mit dem zweiten Betriebsspannungsanschluß (10) verbunden ist und daß der Ausgang (8) des Stromspiegels mit einem Ausgangs (14) verbunden ist.

9. Schaltungsanordnung nach Anspruch 8,
**dadurch gekennzeichnet, daß** mit dem Ausgang (14) die Drain-Sourcestrecke eines als Stromquelle geschalteten Depletion-FET (12) verbunden ist, daß mit dem zweiten Betriebsspannungsanschluß (10) die Drain-Sourcestrecke eines Enhancement-FET (17) angeschlossen ist, daß die Drain-Sourcestrecken beider FET (16, 17) miteinander verbunden sind, daß mit dem Ausgang (18) der Eingang eines Inverters (18) verbunden ist und daß der Ausgang des Inverters mit dem Gateanschluß des Enhancement-FET (17) verbunden ist.

## Claims

1. A circuit arrangement for detecting the temperature in a power semiconductor component with a bipolar semiconductor component disposed in thermal contact with the semiconductor component, in which the size of the reverse current is a measure for the temperature in the power semiconductor component,
**characterised in that** the reverse current is supplied to an amplifying current mirror circuit (2, 3; 6, 7)
**and in that** the amplified current is compared with a reference current.

2. A circuit arrangement according to Claim 1,
**characterised in that** the current mirror circuit contains two MOSFETs (2, 3) having a different ratio of channel length to channel cross section and having otherwise identical parameters.

3. A circuit arrangement according to Claim 1 or 2,
**characterised in that** the mirrored current is supplied to another amplifying current mirror circuit (6, 7)
**and in that** its amplified current is compared with the reference current.

4. A circuit arrangement according to Claim 3,
**characterised in that** the further current mirror circuit contains two MOSFETs (6, 7) having a different ratio of channel length to channel cross section and having otherwise identical parameters.

5. A circuit arrangement according to one of Claims 1 to 4,
**characterised in that** the reference current is generated by a depletion MOSFET (12) connected as a stabilised current regulator, the current of which is set so that it is greater than the mirrored current at normal temperature and smaller than the mirrored current at excess temperature of the power semiconductor component.

6. A circuit arrangement according to Claim 1,
**characterised in that** the bipolar semiconductor component is a bipolar transistor (1) which is connected in series with the current mirror circuit **and in that** the series circuit is connected to the output of a voltage stabiliser.

7. A circuit arrangement according to Claim 6,
**characterised in that** the voltage stabiliser comprises the series circuit consisting of a Zener diode (20) and a depletion FET (21) of the first channel type which is connected as a stabilised current regulator,
**in that** the series circuit is connected between a first and a second operating voltage connection (9, 10) at which the operating voltage lies,
**in that** the node between Zener diode and depletion FET is connected to the gate terminal of an enhancement FET (22) of the second channel type,
**and in that** the enhancement FET is connected between the current mirror circuit and the second operating voltage connection.

8. A circuit arrangement according to one of Claims 1 to 7,
**characterised in that** the output (8) of the current mirror circuit is connected to the drain-source path of a depletion FET (12) connected as current source,
**in that** the drain-source path is connected to the second operating voltage connection (10)
**and in that** the output (8) of the current mirror circuit is connected to an output (14).

9. A circuit arrangement according to Claim 8,
**characterised in that** the drain-source path of a depletion FET (12) switched as a current source is connected to the output (14),
**in that** the drain-source path of an enhancement FET (17) is connected to the second operating voltage connection (10),
**in that** the drain-source paths of both FETs (16, 17) are connected to one another,
**in that** the input of an inverter (18) is connected to the output (18)
**and in that** the output of the inverter is connected to the gate terminal of the enhancement FET (17).

## Revendications

1. Circuit pour détecter la température d'un composant semi-conducteur de puissance ayant un composant semi-conducteur bipolaire en contact thermique avec le composant semi-conducteur, et pour lequel l'intensité du courant de blocage est une mesure de la température du composant semi-conducteur de puissance,
**caractérisé en ce que**
le courant de blocage est appliqué à un miroir de courant amplificateur (2, 3 ; 6, 7) et le courant amplifié est comparé à un courant de référence.

2. Circuit pour détecter la température d'un composant semi-conducteur de puissance selon la revendication 1,
**caractérisé en ce que**
le miroir de courant est formé de deux MOSFET (2, 3) à rapport différent de la longueur des canaux et de leur section, et d'autres paramètres analogues.

3. Circuit pour détecter la température d'un composant semi-conducteur de puissance selon les revendications 1 ou 2,
**caractérisé en ce que**
le courant miroir est appliqué à un autre miroir de courant amplificateur (6, 7) dont le courant amplifié est comparé au courant de référence.

4. Circuit pour détecter la température d'un composant semi-conducteur de puissance selon la revendication 3,
**caractérisé en ce que**
l'autre miroir de courant comprend deux MOSFET (6, 7) à rapport différent entre la longueur et la section du canal, conservant les autres paramètres analogues.

5. Circuit pour détecter la température d'un composant semi-conducteur de puissance selon l'une des revendications 1 à 4,
**caractérisé en ce que**
le courant de référence est généré par un MOSFET à appauvrissement (12) branché comme source de courant constant dont le courant est réglé pour être supérieur au courant miroir à la température normale et inférieur au courant miroir en cas de sur-température du composant semi-conducteur de puissance.

6. Circuit pour détecter la température d'un composant semi-conducteur de puissance selon la revendication 1,
**caractérisé en ce que**
le composant semi-conducteur bipolaire est un transistor bipolaire (1), branché en série avec le miroir de courant et le montage en série est relié en sortie à un stabilisateur de tension.

7. Montage selon la revendication 6,
**caractérisé en ce que**
le stabilisateur de tension comprend un montage en série formé d'une diode Zener (20) et d'un transistor FET à appauvrissement (21) du premier type de canal, branché comme source de courant constant, le montage en série étant branché entre la première et la seconde borne de tension d'alimentation (9, 10) fournissant la tension de fonctionnement, les noeuds entre la diode Zener et le transistor FET à appauvrissement étant reliés à la porte d'un transistor FET à enrichissement, du second type de canal et le transistor à enrichissement FET (22) est branché entre le miroir de courant et la seconde borne de tension d'alimentation.

8. Circuit pour détecter la température d'un composant semi-conducteur de puissance selon l'une des revendications 1 à 7,
**caractérisé en ce que**
la sortie (8) du miroir de courant est reliée au chemin drain-source d'un transistor FET à appauvrissement (12) branché comme source de courant, le chemin drain-source étant relié à la seconde borne de tension de fonctionnement (10) et la sortie (8) du miroir de courant étant reliée à une sortie (14).

9. Circuit pour détecter la température d'un composant semi-conducteur de puissance selon la revendication 8,
**caractérisé en ce que**
la sortie (14) est reliée au chemin drain-source d'un transistor FET (12) à appauvrissement branché comme source de courant, la seconde borne de tension de fonctionnement (10) étant reliée au chemin drain-source d'un transistor FET à enrichissement (17), les chemins drain-source des deux transistors FET (16, 17) étant reliés l'un à l'autre et l'entrée de l'inverseur (18) est reliée à la sortie (18) et la sortie de l'inverseur est reliée au branchement de porte du transistor FET à enrichissement (17).
